# EUROPEAN PATENT SPECIFICATION

(11) **EP 1 008 783 B1**
(45) Date of publication and mention of the grant of the patent: **28.04.2004**
(21) Application number: 99124144.9
(22) Date of filing: 02.12.1999
(51) Int. Cl.: F16H 7/08, F01L 1/02

(54) **V-Type internal combustion engine for vehicle**
Brennkraftmaschine in V-Bauweise für Kraftfahrzeug
Moteur à combustion interne du type en V pour véhicule

(30) Priority: 07.12.1998 JP 34682698
(43) Date of publication of application: 14.06.2000
(73) Proprietor: Honda Giken Kogyo Kabushiki Kaisha, Minato-ku, Tokyo (JP)
(72) Inventor: Kanbe, Takashi, Wako-shi, Saitama (JP); Nomura, Akifumi, Wako-shi, Saitama (JP)
(74) Representative: Liska, Horst, Dr.-Ing.

(56) References cited:
- DE-B- 1 245 672
- US-A- 4 480 603
- US-A- 4 553 509
- US-A- 4 729 348
- PATENT ABSTRACTS OF JAPAN vol. 008, no. 047 (M-280), 2 March 1984 (1984-03-02) -& JP 58 202315 A (HONDA GIKEN KOGYO KK), 25 November 1983 (1983-11-25)

## Description

The present invention relates to a V-type internal combustion engine mounted on a vehicle such as a motorcycle, and particularly to an improved V-type internal combustion engine for a vehicle according to the preamble of claim 1.

Japanese Patent Laid-open No. Sho 64-83912 discloses a V-type internal combustion engine in which a crank shaft supported by a crank case is connected to cam shafts for valve systems of a first bank and a second bank continuously connected to the crankcase in a V-shape via first and second timing transmissions adjacent to each other in the axial direction.

### Problem to be Solved by the Invention

In the above-described v-type internal combustion engine for a vehicle, since the loosened side of a chain of the first timing transmission crosses the stretched side of a chain of the second timing transmission in a space above the crank shaft, a chain tensioner for giving a tension to the upper side, that is, the loosened side of the chain of the first timing transmission is provided in a space range in which the chain tensioner for the first timing transmission does not cross the chain of the second timing transmission.

The related art V-type internal combustion engine for a vehicle, however, is disadvantageous in that the pressing area of the chain tensioner for giving a pressure to the loosened side of the chain of the first timing transmission is narrow, to increase the pressure per unit area therebetween.

US-A-4 480 603 discloses a V-type internal combustion engine according to the preamble of claim 1. The V-type internal combustion engine comprises an automatic mechanism for maintaining tension of an endless timing chain which drives double overhead cam shafts from the engine crank shaft. To make the engine body compact as a whole, the chain tensioning devices are positioned inside the boundaries of the endless chain and in a space between two cylinders of a cylinder unit respectively, what makes the V-type internal combustion engine difficult to assemble.

It is therefore an object of the invention to improve the assembling performance of a V-type internal combustion engine for a vehicle.

In order to achieve the above-described object, the present invention proposes a V-type internal combustion engine according to claim 1.

### Effect of the Invention

According to a feature of the present invention, there is provided a V-type internal combustion engine for a vehicle, in which a crank shaft supported by a crank case is connected to cam shafts for valve systems of a first bank and a second bank continuously connected to the crank case in a V-shape via first and second timing transmissions adjacent to each other in the axial direction; and a first chain tensioner for pressing the outer surface of the upper side of a first timing chain of the first timing transmission, a second chain tensioner for pressing the outer surface of the lower side of a second timing chain of the second timing transmission, a first chain guide being in contact with the outer surface of the lower side of a first timing chain of the first timing transmission, and a second chain guide being in contact with the outer surface of the upper side of a second timing chain of the second timing transmission are mounted to the crank case, wherein a base end, on the crank shaft side, of the first chain tensioner is pivotably supported, by means of a mounting bolt, on the crank case at a position within a side projection plane of the second timing chain. With this feature, since the pressing area of the first chain tensioner for giving a pressure to the upper side of the first timing chain is extended without interference with the second timing chain, it is possible to decrease the pressure per unit area between the first timing chain and the first chain tensioner, and hence to improve the smooth action and durability of the first timing chain.

According to a further feature of the present invention, the first chain tensioner crosses the second chain tensioner in a side view. With this further feature, since the supporting area of the second chain guide for supporting the upper side of the second timing chain is extended without interference with the first timing chain and the first chain tensioner, it is possible to decrease the pressure per unit area between the second timing chain and the second chain guide, and hence to improve the smooth action and durability of the second timing chain.

According to a further feature of the present invention, the first and second chain tensioners and the first and second chain guides are mounted to the crank case by means of mounting bolts. With this further feature, since all the mounting bolts for mounting the first and second chain tensioners and the first and second chain guides can be screwed to the crank case in the same interference with the first timing chain and the first chain tensioner, it is possible to decrease the pressure per unit area between the second timing chain and the second chain guide.

According to a third feature of the present invention, in addition to the first or second feature, the first and second chain tensioners and the first and second chain guides are mounted to the crank case by means of mounting bolts.

With the third feature, since all the mounting bolts for mounting the first and second chain tensioners and the first and second chain guides can be screwed to the crank case in the same direction, it is possible to improve the assembling performance.

### Effect of the Invention

As described above, according to the first feature of the present invention, there is provided a v-type internal combustion engine for a vehicle, in which a crank shaft supported by a crank case is connected to cam shafts for valve systems of a first bank and a second bank continuously connected to the crank case in a V-shape via first and second timing transmissions adjacent to each other in the axial direction; and a first chain tensioner for pressing the outer surface of the upper side of a first timing chain of the first timing transmission, a second chain tensioner for pressing the outer surface of the lower side of a second timing chain of the second timing transmission, a first chain guide being in contact with the outer surface of the lower side of a first timing chain of the first timing transmission, and a second chain guide being in contact with the outer surface of the upper side of a second timing chain of the second timing transmission are mounted to the crank case, the V-type internal combustion engine being characterized in that a base end, on the crank shaft side, of the first chain tensioner is pivotably supported, by means of a mounting bolt, on the crank case at a position within a side projection plane of the second timing chain. With the first feature, since the pressing area of the first chain tensioner for giving a pressure to the upper side of the first timing chain is extended without interference with the second timing chain, it is possible to decrease the pressure per unit area between the first timing chain and the first chain tensioner, and hence to improve the smooth action and durability of the first timing chain.

According to the second feature of the present invention, the first chain tensioner crosses the second chain tensioner in a side view. With the second feature, since the supporting area of the second chain guide for supporting the upper side of the second timing chain is extended without interference with the first timing chain and the first chain tensioner, it is possible to decrease the pressure per unit area between the second timing chain and the second chain guide, and hence to improve the smooth action and durability of the second timing chain.

According to the third feature of the present invention, the first and second chain tensioners and the first and second chain guides are mounted to the crank case by means of mounting bolts. With the third feature, since all the mounting bolts for mounting the first and second chain tensioners and the first and second chain guides can be screwed to the crank case in the same direction, it is possible to improve the assembling performance.

### Mode for Carrying out the Invention

Hereinafter, an embodiment of the present invention will be described with reference to the accompanying drawings.

### Brief Description of the Drawings

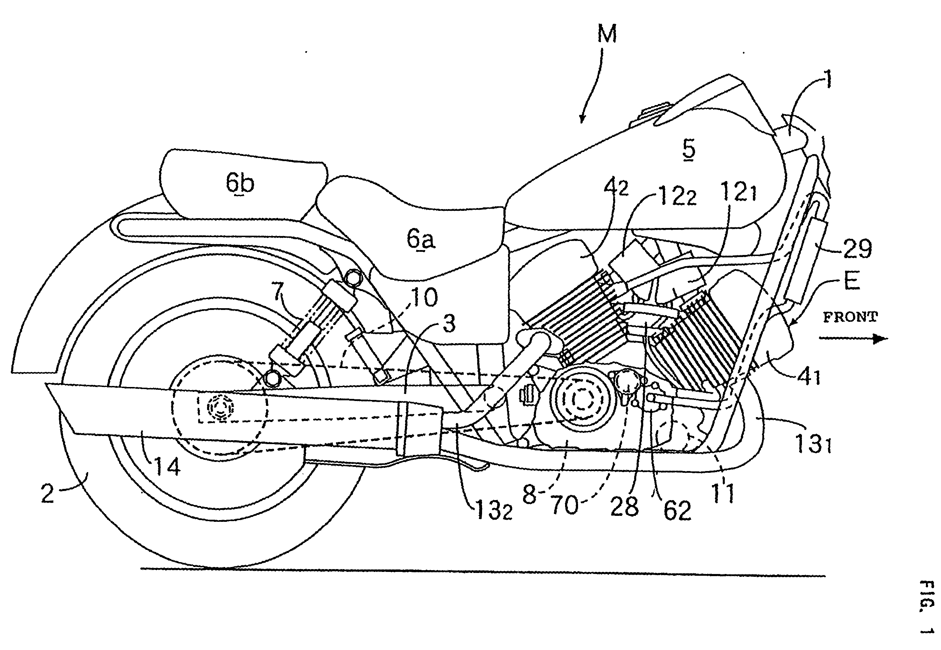

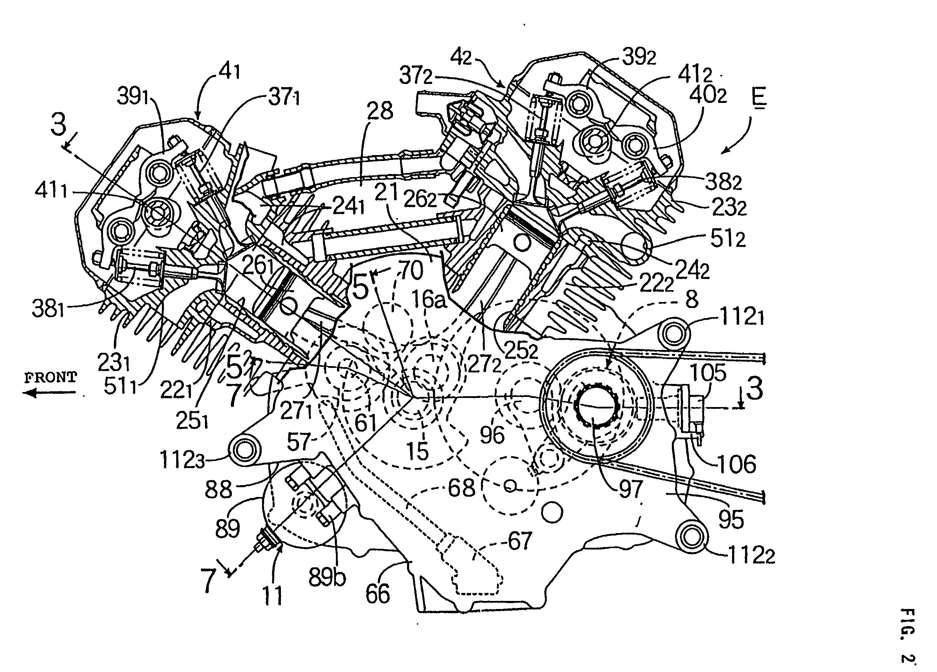

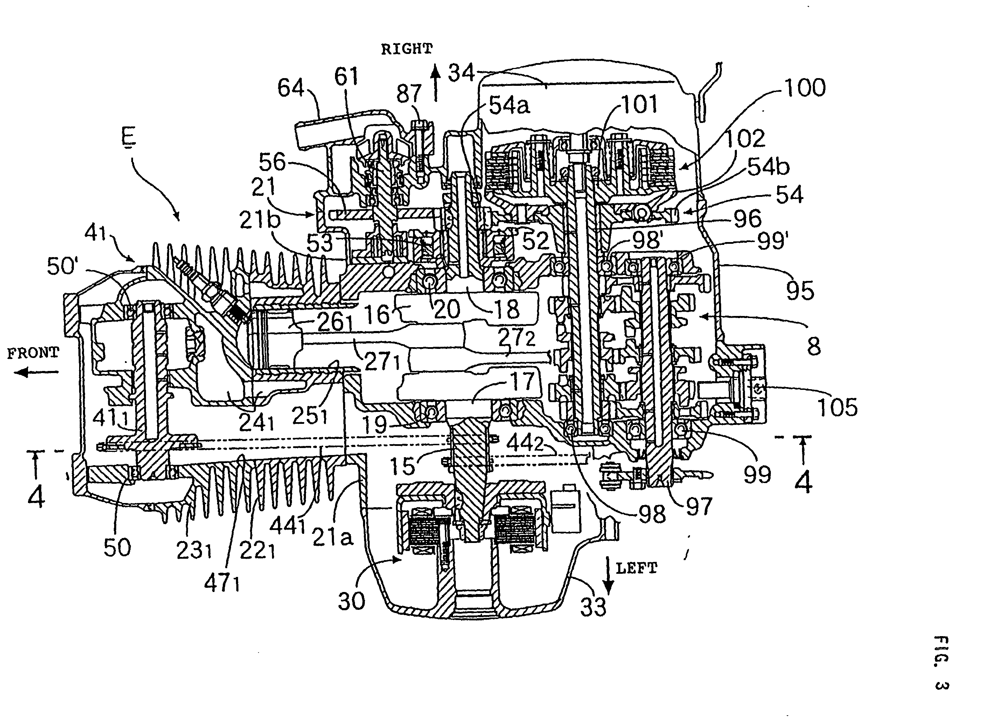

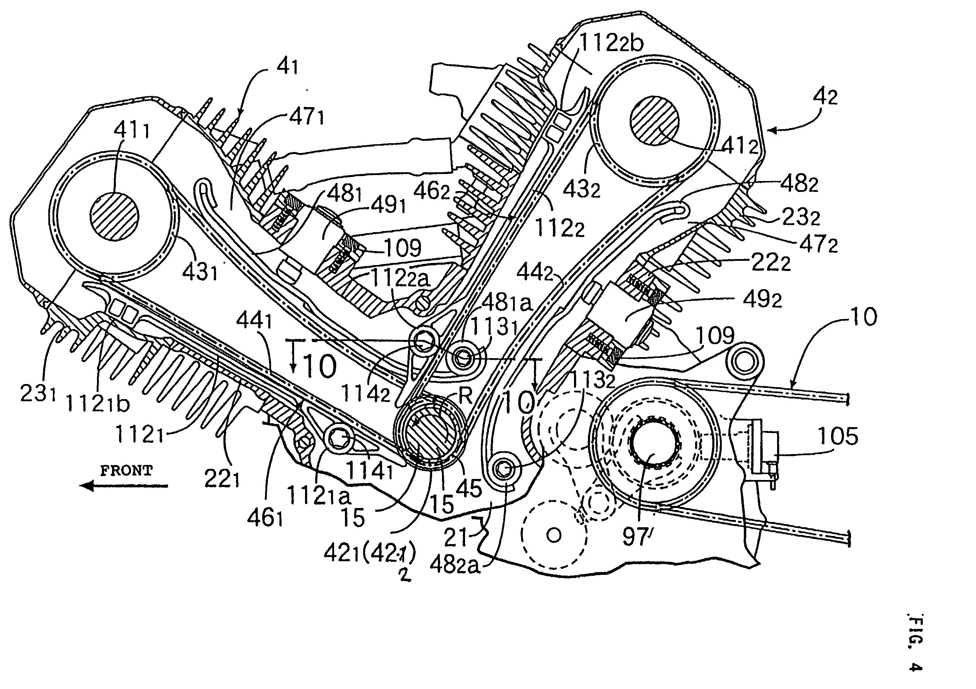

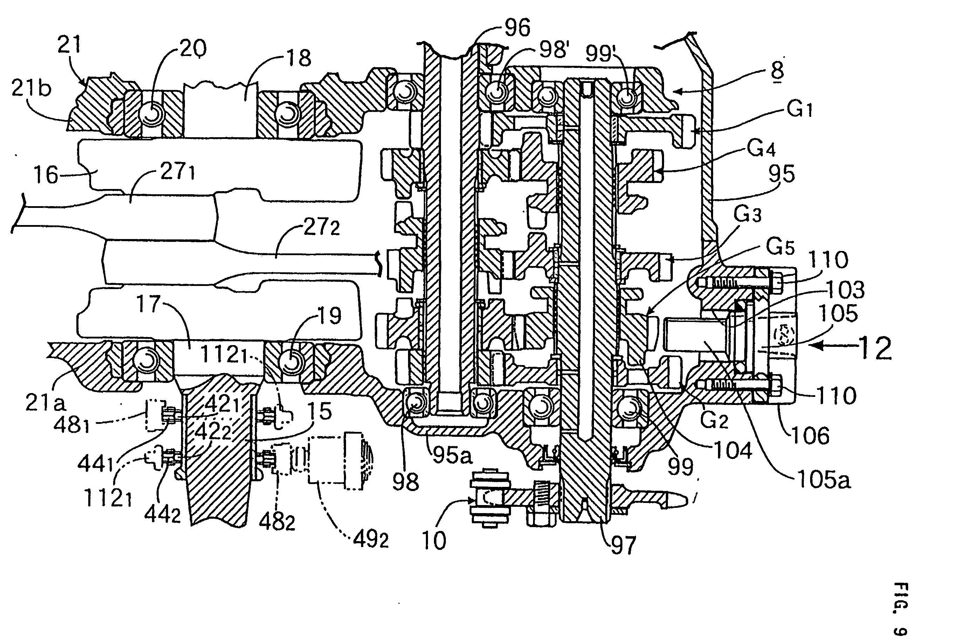

It is illustrated in:
Fig. 1
   A side view of a motorcycle on which a v-type internal combustion engine of the present invention is mounted.
Fig. 2
   A side view of the internal combustion engine shown in Fig. 1.
Fig. 3
   An enlarged vertical sectional view taken on line 3-3 of Fig. 2.
Fig. 4
   A sectional view taken on line 4-4 of Fig. 3.
Fig. 5
   A sectional view taken on line 5-5 of Fig. 2.
Fig. 6
   A system diagram showing the flow of cooling water in the internal combustion engine.
Fig. 7
   A sectional view taken on line 7-7 of Fig. 2.
Fig. 8
   An enlarged view showing front and rear timing transmission units shown in Fig. 3 and their neighborhoods.
Fig. 9
   An enlarged view of a transmission shown in Fig. 3 and its neighborhood.
Fig. 10
   A sectional view taken on line 10-10 of Fig. 4.
Fig. 11
   A plan view showing an exhaust system of the internal combustion engine and its neighborhood.
Fig. 12
   A plan view of a cylinder head of a rear bank of the internal combustion engine.
Fig. 13
   A view seen along an arrow 12 of Fig. 9.

In the following description, the front, rear, right, and left sides are based on a body of the motorcycle.

### Entire Configuration of Motorcycle (see Figs. 1 and 2)

A front fork (not shown in Figs. 1 and 2) for supporting a front wheel is steerably connected to the front end of a body frame 1 of a motorcycle M. A rear fork 3 for supporting a rear wheel 2 is vertically swingably connected to a rear portion of the body frame 1, and a rear cushion 7 is interposed between the rear ends of the rear fork 3 and the body frame 1.

A V-type internal combustion engine E having a front bank 4₁ and a rear band 4₂ is mounted on an intermediate portion of the body frame 1, and a fuel tank 5 is mounted on the intermediate portion of the body frame 1 at a position over the engine E. A main seat 6a and a pillion seat 6b are mounted on the rear portion of the body frame 1 in such a manner as to be continuous to the rear end of the fuel tank 5.

A transmission unit 10 for connecting an output shaft 97 of a transmission 8 connected to the internal combustion engine E and a hub of the rear wheel 2 is disposed on the left side of the rear wheel 2. A starting motor 11 is disposed in front of and under the crank shaft 15.

A front carburetor 12₁ connected to the front bank 4₁ and a rear carburetor 12₂ connected to the rear bank 4₂ are disposed in a valley portion 28 between the front bank 4₁ and the rear band 4₂ of the internal combustion engine E. A front exhaust pipe 13₁ connected to a front surface portion of the front bank 4₁ and a rear exhaust pipe 13₂ connected to a rear portion of the rear bank 4₂ are collectively connected to the front end of a common exhaust muffler 14. The exhaust muffler 14 is disposed opposite to the transmission unit 10 with respect to the rear wheel 2, that is, on the right side of the rear wheel 2.

### Entire Configuration of Internal Combustion Engine (see Figs. 2, 3, 5 and 8)

The front bank 4₁ and the rear bank 4₂ of the internal combustion engine E are disposed fore and aft in such a manner as to cross each other at 90° centered at a crank shaft 15 extending from right to left. The crank shaft 15 has a single crank portion 16 having a crank pin 16a, and a pair of right and left journals 18 and 17 adjacent to both the ends of the crank shaft 15. The journals 18 and 17 are supported by a crank case 21 via ball bearings 20 and 19, respectively.

The front bank 4₁ and the rear bank 4₂ include cylinder blocks 22₁ and 22₂ connected to the front and rear sloping surfaces of a cone-shaped upper portion of the crank case 21 supporting the crank shaft 15, and cylinder heads 23₁ and 23₂ connected to upper ends of the cylinder blocks 22₁ and 22₂, respectively. Water jackets 24₁ and 24₂, which are continuous to each other, are formed in the cylinder blocks 22₁ and 22₂ and cylinder heads 23₁ and 23₂, respectively.

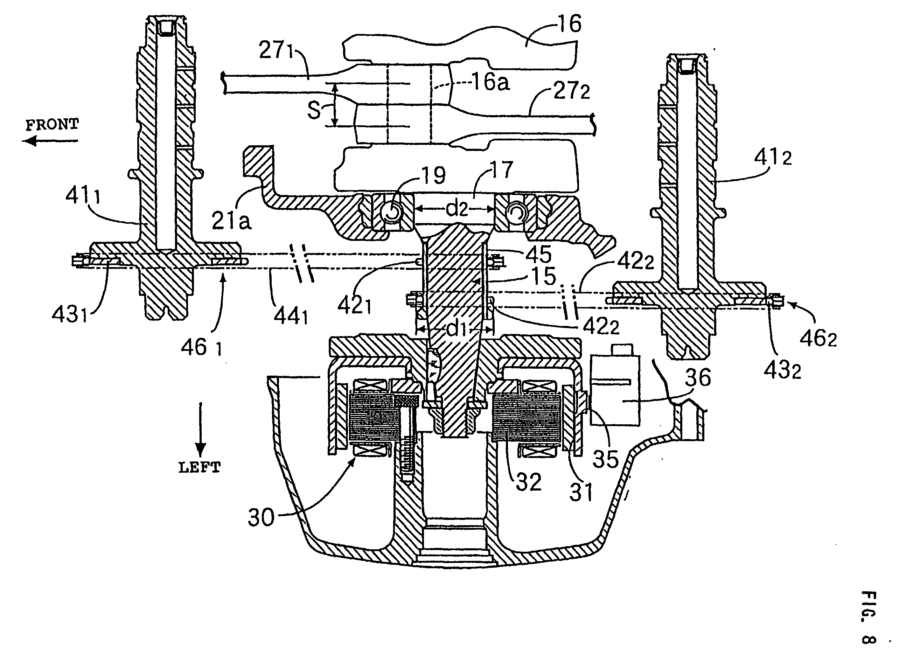

Pistons 26₁ and 26₂ inserted in cylinder bores 25₁ and 25₂ of the cylinder blocks 22₁ and 22₂ are connected to the crank pin 16a via connecting rods 27₁ and 27₂, respectively. In this case, the connecting rod 27₂ of the rear bank 4₂ is connected to the crank pin 16a in such a manner as to be offset leftwardly from the connecting rod 27₁ of the front bank 4₁. The axial line of the rear bank 4₂ is offset leftwardly from that of the front bank 4₁ in accordance with a lateral offset S, as shown in Fig. 8, between the connecting rods 27₁ and 27₂.

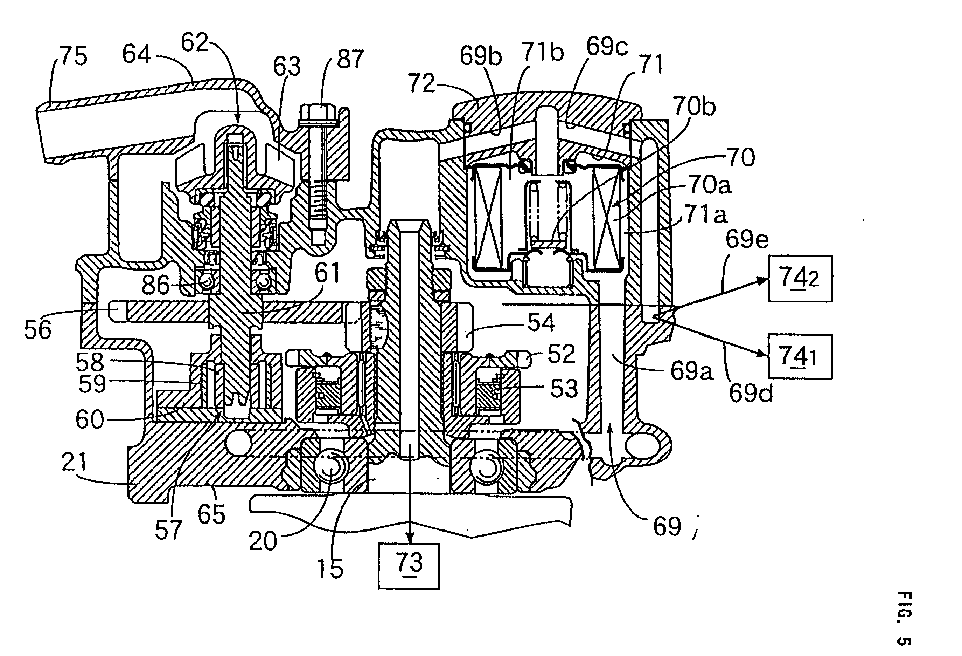

As shown in Fig. 5, an over-running clutch 53 of a starting transmission unit 94, and a drive gear 54a of a first transmission unit 54 connected to a clutch 100 are mounted to a right end portion, projecting outwardly from the right journal 18, of the crank shaft 15 in such a manner as to be adjacently positioned in this order from the inside of the right end portion of the crank shaft 15. Specifically, an outer member of the over-running clutch 53 is spline-connected to the crank shaft 15, and a starting gear 52 is fixed to an inner member of the over-running clutch 53. The drive gear 54a is key-connected to the crank shaft 15.

As shown in Fig. 8, a drive timing sprocket 42₁ of a front timing transmission unit 46₁ for driving a valve system cam shaft 41₁ of the front bank 4₁, a drive timing sprocket 42₂ of a rear timing transmission unit 46₂ for driving a valve system cam shaft 41₂ of the rear bank 4₂, and a rotor 31 of a generator 30 are mounted on a left end portion, projecting outwardly from the left journal 17, of the crank shaft 15 in such a manner as to be adjacently positioned in this order from the inside of the left end portion of the crank shaft 15. Specifically, the rotor 31 is key-connected to the crank shaft 15. The mounting structure of the two drive timing sprockets 42₁ and 42₂ will be described later.

A stator 32 of the generator 30, which is surrounded by the rotor 31, is fixed to a left cover 33 connected to the left end surface of the crank case 21.

A projection 35 is formed at a portion on the outer peripheral surface of the rotor 31. A crank position sensor 36 for detecting a rotational position of the crank shaft 15 in cooperation with the projection 35 is fixed to the left end surface of the crank case 21. An output signal sent from the crank position sensor 36 is used as a control signal for an ignitor or an input signal for a tachometer.

At the right end portion, opposed to the generator 30, of the crank shaft 15, the starting gear 52 is supported thereon via the over-running clutch 53 in such a manner as to be adjacent to the right journal 18, and the first drive gear 54a is key-connected thereto in such a manner as to be adjacent to the starting gear 52.

With this configuration, the front and rear timing transmission units 46₁ and 46₂ can be collectively assembled on the same side, that is, on the left end portion side of the crank shaft 15, to thereby improve the assembling performance thereof, and also the maintenance of both the timing transmission units 46₁ and 46₂ can be easily performed without any interference with other parts only by removing the generator 30 positioned outside both the timing transmission units 46₁ and 46₂ from the crank shaft 15. Further, since the generator 30 is disposed adjacent to both the timing transmission units 46₁ and 46₂, oil scattered from both the timing transmission units 46₁ and 46₂ are splashed to the generator 30 during operation of the engine, it is possible to effectively cool the generator 30.

Further, according to the above configuration, the front and rear timing transmission units 46₁ and 46₂ and the generator 30 are disposed on the left side portion of the crank case 21 while a starting transmission unit 94, the first transmission unit 54, and the clutch 100 are disposed on the other side of the crank case 21, so that good balance in weight is maintained between both sides of the crank case 21 and accordingly, when the internal combustion engine is mounted on the body frame 1, it is possible to easily offer good balance in weight between the right and left sides of the motorcycle M.

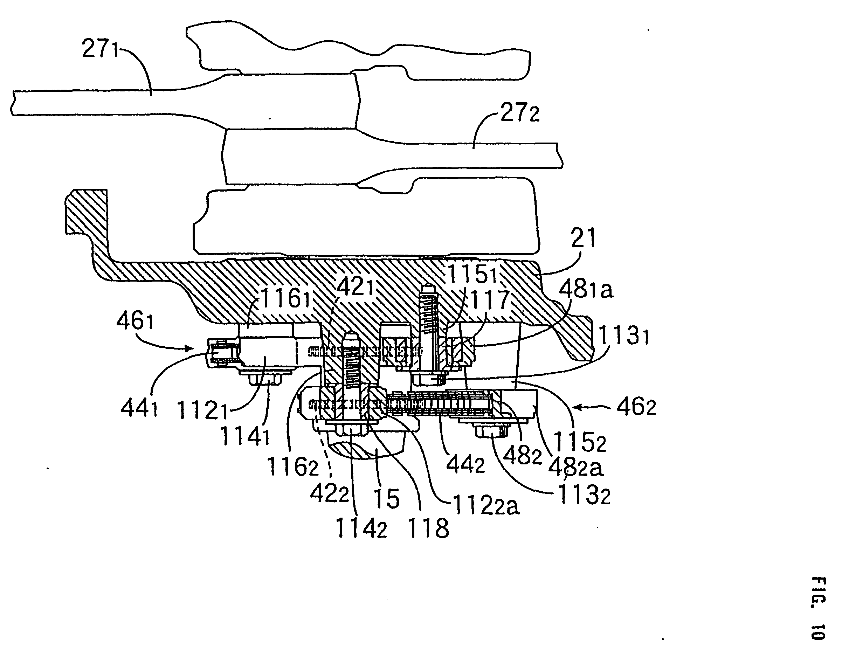

### Valve System (see Figs. 2, 3, 4, 8, 9, and 10)

Intake valves 37₁ and 37₂ and exhaust valves 38₁ and 38₂ are respectively provided in the cylinder heads 23₁ and 23₂ of the front and rear banks 4₁ and 4₂ in such a manner that the intake valves 37₁ and 37₂ are offset to the valley 28 side between the front and rear banks 4₁ and 4₂. Both ends of cam shafts 41₁ and 41₂ extending in parallel to the crank shaft 15 are supported by the cylinder heads 23₁ and 23₂ via ball bearings 50 and 50', respectively. The cam shaft 41₁ is adapted to open/close the intake valve 37₁ and the exhaust valve 38₁ via rocker arms 39₁ and 40₁, respectively, and the cam shaft 41₂ is adapted to open/close the intake valve 37₂ and the exhaust valve 38₂ via rocker arms 39₂ and 40₂, respectively. Timing chains 44₁ and 44₂ are wound around the drive timing sprockets 42₁ and 42₂ fixed to the left end portion of the crank shaft 15 and driven timing sprockets 43₁ and 43₂ fixed to the left ends of the cam shafts 41₁ and 41₂ of the front and rear banks 4₁ and 4₂, respectively. Both the drive timing sprockets 42₁ and 42₂ has a common boss 45 press-fitted around a portion, adjacent to the outer end of the left journal 17, of the crank shaft 15.

The drive timing sprockets 42₁, the timing chain 44₁ and the driven timing sprocket 43₁ of the front bank 4₁ constitute the front timing transmission unit 46₁ for reducing the rotational speed of the crank shaft 15 to half and transmitting the reduced rotational speed to the corresponding cam shaft 41₁. The front timing transmission unit 46₁ is disposed in a front timing transmission chamber 47₁ formed in a side wall, on the generator 30 side, of the front bank 4₁. The drive timing sprockets 42₂, the timing chain 44₂ and the driven timing sprocket 43₂ of the rear bank 4₂ constitute the rear timing transmission unit 46₂ for reducing the rotational speed of the crank shaft 15 to half and transmitting the reduced rotational speed to the corresponding cam shaft 41₂. The rear timing transmission unit 46₂ is disposed in a rear timing transmission chamber 47₂ formed in a side wall, on the generator 30 side, of the rear bank 4₂.

The rear timing transmission unit 46₂ is disposed outside the front timing transmission unit 46₁ in the axial direction, that is, it is located closer to the generator 30 than the front timing transmission unit 46₁ is.

The crank shaft 15 is rotated counterclockwise as shown by an arrow R in Fig. 4. Accordingly, with respect to the timing chain of the front timing transmission 46₁, that is, the front timing chain 44₁, the upper side thereof becomes the loosened side and the lower side thereof becomes the stretched side. Meanwhile, with respect to the timing chain of the rear timing transmission 46₂, that is, the rear timing chain 44₂, the lower side thereof becomes the loosened side and the upper side thereof becomes the stretched side. To give specific tensions to the loosened sides of the front and rear timing chains 44₁ and 44₂, arch-shaped front and rear chain tensioners 48₁ and 48₂ are brought into slide-contact with the outer surfaces of the timing chains 44₁ and 44₂ on the loosened sides, respectively. Known tension lifters 49₁ and 49₂ for pressing the central portions of the chain tensioners 48₁ and 48₂ in the longitudinal direction to the front and rear timing chains 44₁ and 44₂ with specific loads are mounted to mounting planes formed on the back surfaces of the cylinder blocks 22₁ and 22₂ of the banks 4₁ and 4₂ with bolts 109, respectively.

The front and rear chain tensioners 48₁ and 48₂ are respectively provided on the loosened sides of the front and rear timing chains 44₁ and 44₂ in such a manner as to extend substantially over the entire lengths of the front and rear timing chains 44₁ and 44₂. Bosses 48₁ₐ and 48₂ₐ formed at the base ends, on the crank shaft 15 side, of the front and rear chain tensioners 48₁ and 48₂ are turnably mounted on the crank case 21 by means of mounting bolts 113₁ and 113₂, respectively. In particular, the boss 48₁ₐ of the chain tensioner 48₁ₐ for pressing the outer surface of the upper side of the front timing chain 44₁ is disposed at a position within a side projection plane of the rear timing chain 44₂. The leading ends, on the cam shafts 41₁ and 41₂ sides, of the front and rear chain tensioners 48₁ and 48₂ are taken as free ends.

By disposing the boss 48₁ₐ at the base end of the chain tensioner 48₁ at a position within the side projection plane of the rear timing chain 44₂, the pressing range of the front chain tensioner 48₁ for giving a pressure to the loosened side of the front timing chain 44₁ can be sufficiently extended without interference with the rear timing chain 44₂. As a result, it is possible to give a specific tension to the front timing chain 44₁ while decreasing a pressure per unit area between the front timing chain 44₁ and the front chain tensioner 48₁, and hence to ensure the smooth action and durability of the front timing chain 44₁.

Front and rear chain guides 112₁ and 112₂ for slidably guiding the front and rear timing chains 44₁ and 44₂ are disposed on the outer surfaces of the stretched sides of the front and rear timing chains 44₁ and 44₂ in such a manner as to extend substantially over the entire lengths thereof. Accordingly, the rear chain guide 112₂ in contact with the outer surface of the upper side of the rear timing chain 44₂ crosses the front chain tensioner 48₁ in a side view. The front and rear chain guides 112₁ and 112₂ are supported such that bosses 112₁ₐ and 112₂ₐ formed on the end potions, on the crank shaft 15 sides, of the front and rear chain guides 112₁ and 112₂ are turnably mounted on the crank case 21 by means of mounting bolts 114₁ and 114₂ and projections 112_{1b} and 112_{2b} formed on the back surfaces of the end portions, on the sides of the cam shafts 41₁ and 41₂, of the front and rear chain guides 112₁ and 112₂ are in contact with the inner surfaces of the cylinder heads 23₁ and 23₂.

By allowing the rear chain guide 112₂ to cross the chain tensioner 48₁ₐ in a side view as described above, the supporting area of the rear chain guide 112₂ for supporting the stretched side of the rear timing chain 44₂ is extended without interference with the front timing chain 44₁ and the chain tensioner 48₁ₐ. As a result, it is possible to decrease the pressure per unit area between the rear timing chain 44₂ and the rear chain guide 112₂, and hence to ensure the smooth action and durability of the rear timing chain 44₂.

The mounting bolts 113₁, 113₂, 114₁, and 114₂ for mounting the front and rear chain tensioners 48₁ and 48₂, and the front and rear chain guides 112₁ and 112₂ are all arranged in parallel to the crank shaft 15, and are screwed in mounting seats 115₁, 115₂, 116₁ and 116₂ projectingly provided on a side wall of the crank case 21 with distance collars 117 and 118 put therebetween. The bosses 48₁ₐ, 48₂ₐ, 112₁ₐ, and 112₂ₐ of the chain tensioners 48₁ and 48₂, and chain guides 112₁ and 112₂ are turnably supported by the distance collars 117 and 118. Depending on the axial offsets of the front and rear timing transmissions 46₁ and 46₂, a difference in projecting height is given between the mounting seat 115₁ (116₁) on the front timing transmission 46₁ side and the mounting seat 115₂ (116₂) on the rear timing transmission 46₂ side.

By arranging all the mounting bolts 113₁, 113₂, 114₁ and 114₂ for mounting the front and rear chain tensioners 48₁ and 48₂ and the front and rear chain guides 112₁ and 112₂ in parallel to the crank shaft 15, all the mounting bolts 113₁, 113₂, 114₁ and 114₂ can be screwed in the same direction, to enhance the assembling performance.

The crank case 21 is divided at the central portion in the lateral direction into a right case half 21b and a left case half 21a. Outer races of the ball bearings 20 and 19 are previously lightly press-fitted in the right and left case halves 21b and 21a, respectively, and upon assembly of both the case halves 21b and 21a, the right and left journals 18 and 17 of the crank shaft 15 are lightly press-fitted in inner races of the ball bearings 20 and 19, respectively. Here, in order to allow the drive timing sprockets 42₁ and 42₂ whose common boss 45 is press-fitted around the crank shaft 15 at the position adjacent to the outer side of the left journal 17 to pass through the inner race of the left ball bearing 19, an outside diameter d₁ of each of the drive timing sprockets 42₁ and 42₂ is set to be slightly smaller than an inside diameter d₂ of the inner race of the ball bearing 19. As a result, it is possible to easily press-fit the common boss 45 of both the drive timing sprockets 42₁ and 42₂ around the crank shaft 15 as a single part. Further, since the ball bearings 20 and 19 are lightly press-fitted in the right and left case halves 21b and 21a and the right and left crank journals 18 and 17, it is possible to suppress occurrence of vibration of the ball bearings 20 and 19 and hence reduce occurrence of noise during operation of the engine.

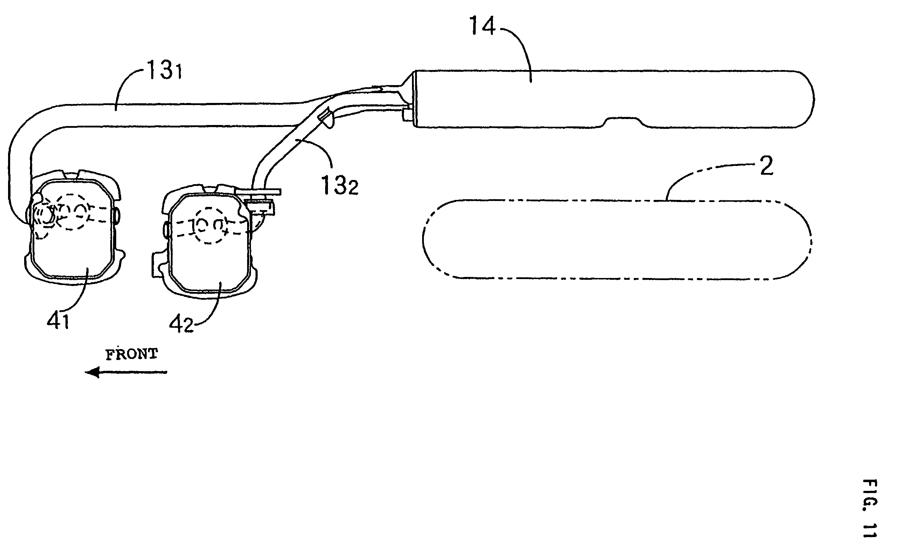

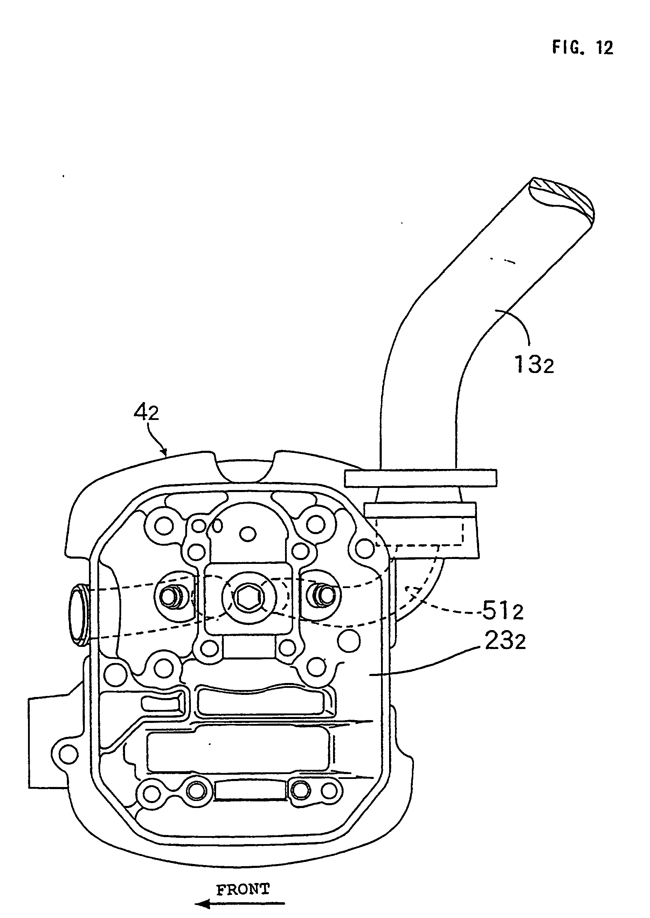

### Exhaust System (see Figs. 2, 11 and 12)

The exit of an exhaust port 51₁ of the front bank 4₁ is opened to the front of the cylinder head 23₁ of the front bank 4₁, and the upstream end of the front exhaust pipe 13₁ is connected to the exit of the exhaust port 51₁. The exit of an exhaust port 51₂ of the rear bank 4₂ is opened to a right side surface, opposed to the rear timing transmission unit 46₂, of the rear portion of the cylinder head 23₂ of the rear bank 4₂, and the upstream end of the rear exhaust pipe 13₂ is connected to the exit of the exhaust port 51₂.

The front and rear exhaust pipe 13₁ and 13₂ arranged on the upper and lower sides extend on the right side, opposed to the front and rear chain transmission units 46₁ and 46₂, of the internal combustion engine E, and the downstream ends of the front and rear exhaust pipe 13₁ and 13₂ are collected and connected to the exhaust muffler 14 disposed on the right side of the rear wheel 2.

With this configuration, since the front and rear timing transmission units 46₁ and 46₂ are collectively disposed on one side, to which the rear bank 4₂ is offset from the front bank 4₁, of the internal combustion engine E, and the front and rear exhaust pipes 13₁ and 13₂ arranged on the upper and lower sides are collectively located on the other side of the internal combustion engine E, it is possible to make the entire width of the internal combustion engine E including both the exhaust pipes 13₁ and 13₂ as narrow as possible while easily preventing interference between both the timing transmission units 46₁ and 46₂ and both the exhaust pipes 13₁ and 13₂.

Further, according to the above configuration, since the rear exhaust pipe 13₂ disposed on the right side of the motorcycle M is connected to the exhaust port 51₂ opened to the right side surface of the rear portion of the cylinder head 23₂ of the rear bank 4₂, the degree of bending of the rear exhaust pipe 13₂ is reduced, so that it may make small the flow resistance of the pipe and hence to improve the output performance.

### Transmission System (see Figs. 2, 3 and 9)

A mission case portion 95 protruded from a lower portion of the rear bank 4₂ is formed integrally with the crank case 21. An input shaft 96 and an output shaft 97 of the transmission 8, which are provided directly behind the crank shaft 15 in such a manner as to be located on the front and rear sides in parallel to the crank shaft 15, are contained in the mission case portion 95. Both ends of the input shaft 96 are supported by right and left walls of the mission case portion 95 via a pair of ball bearings 98' and 98, and both ends of the output shaft 97 are supported by the right and left walls of the mission case portion 95 via a pair of ball bearings 99' and 99. An inner member 101 of the clutch 100 covered with the right cover 34 connected to the right side surface of the crank case 21 is spline-connected to the right end portion of the input portion 96. A first driven gear 54b, which is meshed with the first drive gear 54a to constitute the first transmission unit 54, is mounted to the inner end of the outer member 102. A plurality (five in the example shown in the figures) of speed change gear trains G₁ to G₅ are selectively arranged between the input shaft 96 and the output shaft 97.

As shown in Fig. 9, a left wall 95a, which supports the left end portions of the input shaft 96 and the output shaft 97, of the mission case portion 95 is offset rightwardly from the timing transmission unit 46₂ of the rear bank 4₂. Accordingly, when the tensioner lifter 49₂ of the timing transmission unit 46₂ of the rear bank 4₂ is mounted on the rear surface of the cylinder block 22₂ of the rear bank 4₂, it is possible to prevent the tensioner lifter 49₂ from interfering with the mission case portion 95.

In particular, since the timing transmission unit 46₂ of the rear bank 4₂ is disposed outwardly, that is, leftwardly from the timing transmission unit 46₁ of the front bank 4₁, it is possible to minimize the rightward offset of the mission case portion 95 from the crank case 21, and hence to realize the compactness of the internal combustion engine E.

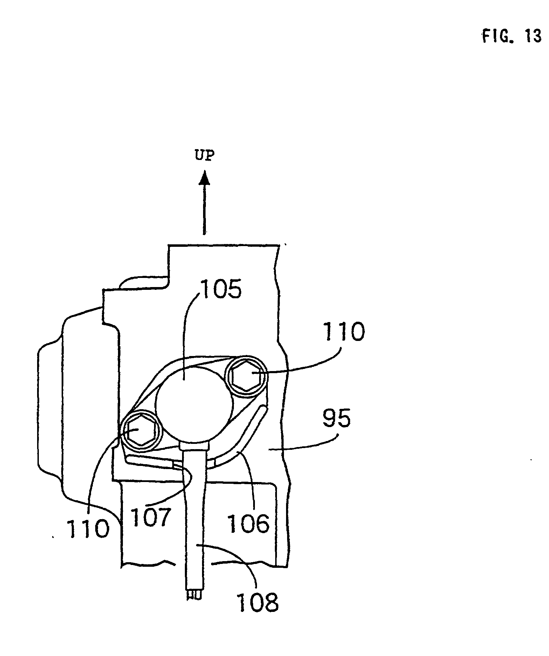

### Vehicular Speed Sensor (see Figs. 2, 9 and 13)

The rear wall of the mission case portion 95 has a mounting hole 103, and a vehicular speed sensor 105 having a detecting portion 105a inserted in the mission case portion 95 through the mounting hole 103 is fixed on the rear wall of the mission case portion 95 with a bolt 110. The vehicular speed sensor 105 is disposed with the detecting portion 105a facing to the tips of a top driven gear, that is, a driven gear 104 of the top gear train G₅.

The top driven gear 104, which is spline-connected to the output shaft 97, serves as a shift gear for working the second-speed gear train G₂ by leftward shift thereof. In this embodiment, even when the top driven gear 104 is shifted leftwardly, the outer periphery of the top driven gear 104 is not deviated from the detecting region of the vehicular speed sensor 105. The vehicular speed sensor 105 creates a signal corresponding to the number of teeth of the top driven gear 104 just crossing the detecting portion of the vehicular speed sensor 105 and outputs the signal to a computer (not shown). The computer calculates a vehicular speed on the basis of the signal thus inputted from the vehicular speed sensor 105 and displays the vehicular speed on a speed meter (not shown) on an instrument panel (not shown) of the motorcycle M.

In this way, the vehicular speed sensor 105 for detecting the rotational speed of the top driven gear 104 usually rotated together with the output shaft 97 can be mounted on the rear wall of the mission case portion 95 without any interference with not only the rear bank 4₂ tilted rearwardly toward the mission case portion 95 side but also the rear exhaust pipe 13₂ mounted on the rear portion of the rear bank 4₂.

A rib 106 for covering the lower surface of the vehicular speed sensor 105 is integrally formed on the rear surface of the mission case portion 95. The central portion of the rib 106 has a through-hole 107 allowing a lead wire 108 of the vehicular speed sensor 105 to pass therethrough.

As shown in Fig. 2, a pair of right and left hangers 112₁ and a pair of right and left hangers 112₂ are integrally formed on the upper and lower sides of the rear surface of the mission case portion 95 in such a manner as to project therefrom, and a pair of right and left hangers 112₃ are integrally formed on the front surface of the crank case 21 in such a manner as to project therefrom. When the internal combustion engine E is mounted on the body frame 1, these hangers 112₁, 112₂, and 112₃ are connected to the body frame 1. Then, the vehicular speed sensor 105 is disposed in a rear dead space of the interior of the mission case portion 95 surrounded by the rear side two pairs of the hangers 112₁ and 112₂. with this configuration, it is possible to enhance the space efficiency.

The above rib 106 functions to protect the vehicular speed sensor 105 from being affected by small stones and sands flying from a road during running of the motorcycle M. The through-hole 107 for allowing the lead wire 108 to pass therethrough functions as a port for discharging rainwater and cleaning water permeated in the rib 106.

### Lubricating and Cooling System (see Figs. 2, 3, 5 and 6)

As shown in Figs. 2, 3 and 5, the first drive gear 54a key-connected to the right end portion of the crank shaft 15 is meshed at its two different portions in the peripheral direction with a pump drive gear 56 and the first driven gear 54b.

The pump drive gear 56 is key-connected to a pump shaft 61 which is supported via a bearing 86 by the right cover 34 connected to the right end surface of the crank case 21. The pump shaft 61, which is in parallel to the crank shaft 15, is disposed in front of and over the crank shaft 15.

An inner rotor 58 of a trochoid type oil pump 57 for lubrication is fixed on the inner end of the pump shaft 61, and an impeller 63 of a water pump 62 for cooling is fixed on the outer end of the pump shaft 61. A pump housing 60 for containing an outer rotor 59 of the oil pump 57 is screwed in a partition wall 65 for supporting the ball bearing 20 of the crank case 21. A pump casing 64 for containing the impeller 63 is fixed on the outer surface of the right cover with a bolt 87. In this way, the oil pump 57 and the water pump 62 are coaxially disposed in front of and over the crank shaft 15. The oil pump 57 is provided on the crank case 21 in such a manner as to be adjacent to the outer side of the over-running clutch 53 in the radial direction.

A suction port of the oil pump 57 is connected via a suction pipe 68 to a strainer 67 (see Fig. 2) disposed in an oil sump 66 on the inner bottom of the crank case 21, and a discharge port of the oil pump 57 is communicated via an oil passage 69 to the crank shaft 15, the cam shafts 41₁ and 41₂ of the front and rear banks 4₁ and 4₂, and other portions to be lubricated.

An oil filter 70 positioned substantially directly over the crank shaft 15 is interposed in the course of the oil passage 69. The oil filter 70 is mounted to a filter chamber 71 formed in the right cover 34, and a cap 72 for closing an opening of the chamber 71 is fixed to the right cover 34. An inlet chamber 71a on the outer peripheral side of the oil filter 70 in the filter chamber 71 is communicated to the discharge port of the oil pump 57 via an upstream portion 69a of the oil passage 69 formed in the crank case 21, and an outlet chamber 71b on the inner peripheral side of the oil filter 70 in the filter chamber 71 is communicated to two branch oil passages 69b and 69c, formed in the cap 72, of the oil passage 69. One branch oil passage 69b is communicated to a portion 73 to be lubricated of the crank shaft 15 system. The other branch oil passage 69c is further branched at a connection surface between the crank case 21 and the right cover 34 into front and rear branch oil passages 69d and 69e which are in turn communicated to portions 74₁ and 74₂ to be lubricated of the valve systems including the cam shafts 41₁ and 41₂ of the front and rear banks 4₁ and 4₂.

When the oil pump 57 is driven by the rotation of the crank shaft 15 via the pump drive gear 56 and the pump shaft 61, oil accumulated in the oil sump 66 is sucked from the strainer 67 and is press-fed to the filter chamber 71. The oil is filtered in the oil filter 70 and is then supplied to the portion 73 to be lubricated of the crank shaft 15 system and the portions 74₁ and 74₂ to be lubricated of the valve systems of the front and rear banks 4₁ and 4₂, to thus lubricate these portions 73, 74₁ and 74₂. Further, with the above-described arrangement and configuration of the oil pump 57, the filter chamber 71, the oil filter 70 and the oil passage 69, it is possible to make the length of the oil passage 69 as short as possible, and also to arrange the lubricating systems for the front and rear banks 4₁ and 4₂ substantially symmetrically each other and hence to uniformly lubricate both the banks 4₁ and 4₂.

The oil filter 70 is provided with a relief valve 70b for short-circuiting the inlet chamber 71a to the outlet chamber 71b when a filter element 70a of the oil filter 70 becomes blocked.

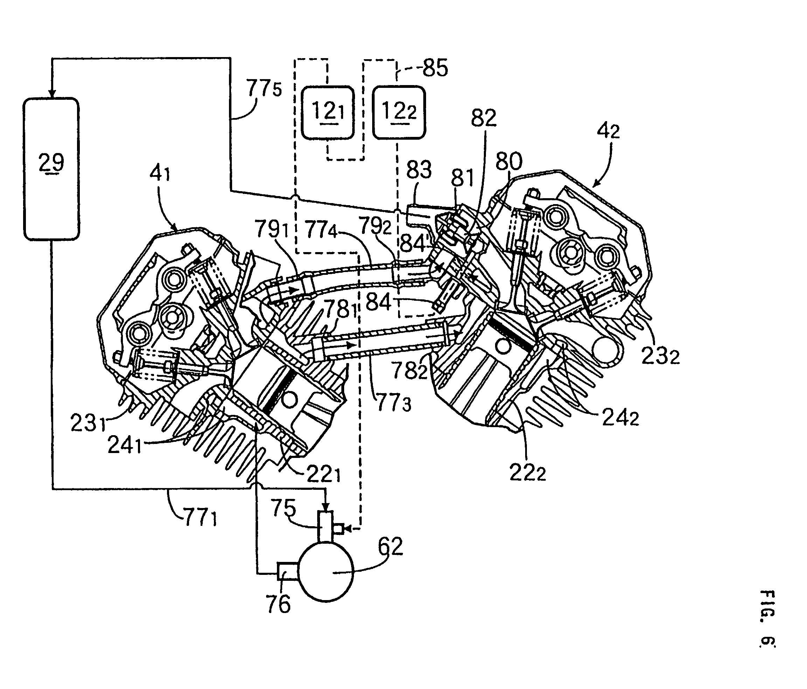

In the water pump 62, as shown in Fig. 6, a suction pipe 75 is connected to an outlet of the radiator 29 (disposed in front of the internal combustion engine E as shown in Fig. 1) via a water pipe 77₁, and a discharge pipe 76 is connected to a lower portion of the water jacket 24₁ of the front bank 4₁ via a water pipe 77₂.

As described above, the front and rear banks 4₁ and 4₂ include the cylinder blocks 22₁ and 22₂, the cylinder heads 23₁ and 23₂, and the water jacket 24₁ and 24₂ continuous to each other, respectively, and a combined chamber 80 opened to the front surface of the cylinder head 23₂ of the rear bank 4₂ is formed in the cylinder head 23₂ and an upper portion of the water jacket 24₂ is communicated to the combined chamber 80.

Lower joints 78₁ and 78₂ communicated to lower portions of the corresponding water jackets 24₁ and 24₂ are integrally formed on the opposed surfaces of the front and rear banks 4₁ and 4₂ in such a manner as to project therefrom. Both ends of a lower communication water pipe 77₃ disposed in the valley portion 28 are connected to these joints 78₁ and 78₂.

An upper joint 79₁ communicated to an upper portion of the jacket 23₁ is integrally formed on the rear surface of the front bank 4₁, and a flange of an upper joint 79₂ communicated to the combined chamber 80 is screwed in a lower surface portion of the cylinder head 23₂ of the rear bank 4₂. Both ends of a rear communication water pipe 77₄ disposed in the valley portion 28 are connected to these upper joints 79₁ and 79₂.

A thermostat 82 is disposed in the combined chamber 80, and a thermostat cover 81 for holding the thermostat 82 and covering the opening of the combined chamber 80 is connected to the front surface of the cylinder head 23₂.

An outlet joint 83 connected to the outlet of the thermostat 82 is integrally formed on the thermostat cover 81. The outlet joint 83 is connected to the inlet of the radiator 29 via a water pipe 77₅.

A bypass outlet joint 84 communicated to the combined chamber 80 via a communication passage 84' is integrally formed on the upper joint 79₂. The bypass outlet joint 84 is communicated to a heating chamber of the carburetor 12₂ of the rear bank 4₂, a heating chamber of the carburetor 12₁ of the front bank 4₁, and the suction pipe 75 in sequence by way of a bypass water pipe 85. The bypass outlet joint 84 has an inside diameter sufficiently smaller than that of the outlet joint 83 of the thermostat cover 81.

When the temperature of water in the combined chamber 80 becomes equal to or less than a specific temperature, the thermostat 82 blocks the combined chamber 80 from the thermostat cover 81 and opens the communication passage 84' between the combined chamber 80 and the bypass outlet joint 84. On the other hand, when the temperature of water in the combined chamber 80 becomes more than the specific temperature, the thermostat 82 communicates the combined chamber 80 to the thermostat cover 81 and closes the communication passage 84'.

As described, when the water pump 62 is driven by the rotation of the crank shaft 15 via the pump drive gear 56 and the pump shaft 61, if the temperature of water in the combined chamber 80 is relatively low, the thermostat 82 blocks the combined chamber 80 from the thermostat cover 81 and opens the communication passage 84'. Consequently, cooling water is fed first from the discharge pipe 76 to the water jacket 24₁ of the front bank 4₁ by the water pump 62. Here, about a half of the cooling water is immediately fed to the water jacket 24₂ of the rear bank 4₂ by way of the lower communication water pipe 77₃, and the remaining cooling water passes through the water jacket 24₁ of the front bank 4₁ and is then fed to the combined chamber 80 of the rear bank 4₂ by way of the upper communication water pipe 77₄. In the combined chamber 80, the cooling water is combined with the above cooling water having passed through the water jacket 24₂ of the rear bank 4₂. The cooling water thus combined is fed from the combined chamber 80 to the bypass outlet joint 84 by way of the communication passage 84', being further fed from the bypass outlet joint 84 to the heating chambers of the carburetors 12₂ and 12₁ of the rear and front banks 4₂ and 4₁ in sequence, and is returned to the suction pipe 75 of the water pump 62. Thereafter, the same circulation is repeated. Such circulation of cooling water not by way of the radiator 29 makes it possible to promote the warming of the internal combustion engine E, and to heat the carburetors 12₁ and 12₂ thereby preventing icing of a fuel nozzle and its neighborhood.

With advance of the warming of the internal combustion engine E, the temperature of the cooling water whose components having passed through the water jackets 24₁ and 24₂ of the front and rear banks 4₁ and 4₂ and combined in the combined chamber 80 becomes the above specific temperature. At this time, since the thermostat 82 communicates the combined chamber 80 to the thermostat cover 81 and closes the communication passage 84', the above cooling water flows on the outlet joint 83 side, and is returned to the suction pipe 75 of the water pump 62 by way of the radiator 29. Thereafter, the same circulation is repeated. Accordingly, the front and rear banks 4₁ and 4₂ can be effectively cooled with the cooling water cooled by the radiation action of the radiator 29.

Since the lower and upper communication water pipes 77, and 77, are sufficient to be relatively short in length and are disposed in the valley portion 28 between both the banks 4₁ and 4₂, they are hidden by both the banks 4₁ and 4₂. The water pipes 77₃ and 77₄, therefore, are inconspicuous as seen from the outside, that is, do not degrade the appearance of the internal combustion engine E.

Since the thermostat 82 is disposed in the combined chamber 80 in which components of cooling water having cooled the front and rear banks 4₁ and 4₂ are combined, it can suitably control the water temperature in both the banks 4₁ and 4₂ by certainly detecting an average water temperature in both the banks 4₁ and 4₂. Further, it is not required to make a layout of piping for the thermostat 82, thereby simplifying the entire piping layout.

Since the thermostat cover 81 including the outlet joint 83 projecting forwardly is connected to the front surface of the upper portion of the rear bank 4₂, it is possible to reduce the degree of bending of the water pipe 77₅ for communicating the outlet joint 83 to the inlet of the radiator 29, and hence to make small the flow resistance of the water pipe 77₅ and also improve the entire appearance of the internal combustion engine E.

Since the bypass outlet joint 84 having the inside diameter smaller than that of the upper joint 79₂ of the rear bank 4₂ and being communicated to the combined chamber 80 is integrally formed on the upper joint 79₂, it is possible to collectively mount the upper joint 79₂ and the bypass outlet joint 84 to the rear bank 4₂, and hence to simplify the piping works.

Since the oil pump 57 and the water pump 62 are coaxially disposed and are driven by the common pump shaft 61 driven by the first drive gear 54a, it is possible to simplify the drive system thereof.

Since the oil pump 57 is disposed adjacent to the over-running clutch 53 in the radial direction, it is possible to suppress the increase in lateral width of the internal combustion engine E, although the oil pump 57 and the water pump 62 are coaxially disposed.

Since the oil pump 57 and the water pump 62 are disposed in front of and over the crank shaft 15, it is possible to compactly form the rear portion of the crank case 21 and the mission case portion 95 continuous thereto without any interference with the oil pump 57 and the water pump 62, and hence to ensure a desirable ground clearance of the internal combustion engine E and easily reduce the heights of the driver's seat 6a and the pillion seat 6b. In this case, although the front portion of the crank case 21 is slightly swelled by the effect of the above arrangement of the oil pump 57 and the water pump 62, the swelled portion of the crank case 21 is contained in the lower dead space of the front bank 4₁, and therefore, it does not obstruct the compactness of the internal combustion engine E.

Since the drive system of both the pumps 57 and 62 disposed over the crank shaft 15 is not required to be dipped in oil accumulated in the oil sump 66, it is possible to eliminate the agitation of oil by the drive system and hence to reduce the power loss.

Since the input shaft 96 and the output shaft 97 of the transmission 8 are horizontally disposed directly after the crank shaft 15 without any interference with the oil pump 57 and the water pump 62, it is possible to achieve the compactness of the mission case portion 95 and also flatten the upper wall of the mission case portion 95. This makes it possible to sufficiently ensure the distance between the mission case portion 95 and the rear exhaust pipe 13₂ and hence to easily prevent the mission case portion 95 and the transmission 8 contained therein from being thermally affected by the rear exhaust pipe 13₂.

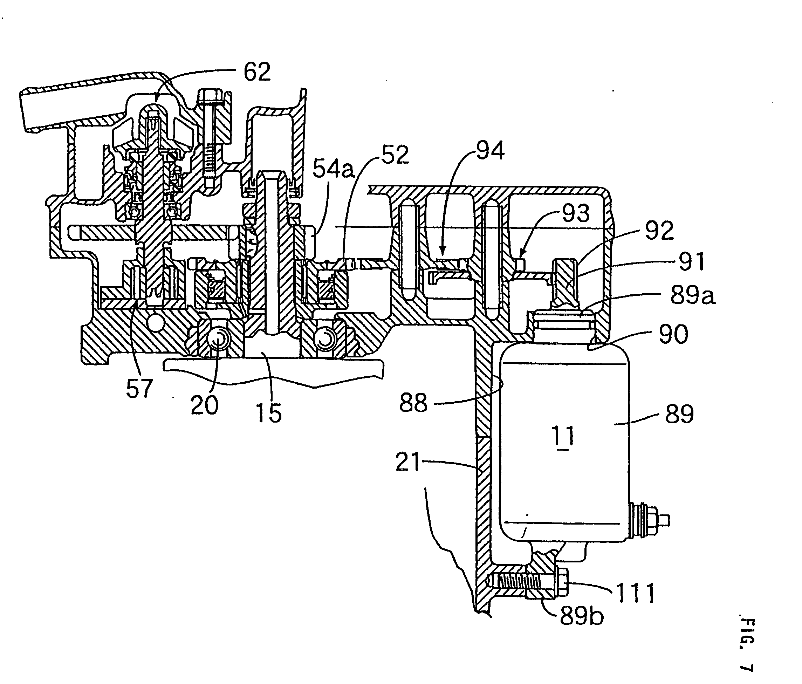

### Starting System (Figs. 2 and 7)

A containing recessed portion 88 is formed in the bottom surface of the front portion of the crank case 21, and the starting motor 11 is disposed in the containing recessed portion 88 with its axial line directed in parallel to the crank shaft 15. A casing 89 of the starting motor 11 is mounted on the crank case 21 in such a manner that a cylindrical supporting portion 89a at one end of the casing 89 is liquid-tightly fitted in a through-hole 90 formed in the end wall of the containing recessed portion 88 and a mounting arm portion 89b at the other end of the casing 89 is fastened to the crank case 21 with a bolt 111. The leading end of a rotor shaft 91 of the starting motor 11 is inserted in the crank case 21, and a pinion 92 formed on the leading end of the rotor shaft 91 is adapted to drive the starting gear 52 via a reduction gear train 93. The starting gear 52, the over-running clutch 53, and the reduction gear train 93 constitute a starting transmission unit 94 for transmitting the rotational power of the starting motor 11 to the crank shaft 15.

As described above, since the starting motor 11 is disposed in front of and under the crank shaft 15, the starting motor 11 also does not obstruct the compactness of the rear portion of the crank case 21 and the mission case portion 95, and since the starting motor 11 is contained in the lower dead space of the front bank 4₁, it does not obstruct the compactness of the internal combustion engine E. Further, the reduction gear train 93 is dipped in oil accumulated in the oil sump 66 on the bottom of the crank case 21 by the effect of the above arrangement of the starting motor 11; however, since the reduction gear train 93 is activated not during operation of the engine but upon start-up of the engine, it does not agitate the oil during operation of the engine and thereby does not cause the power loss.

The present invention is not limited to the above embodiments, and it is to be understood that various changes in design may be made without departing from the scope of the present invention.
Object: To provide a V-type internal combustion engine for a vehicle, which is capable of extending the pressing area of a chain tensioner for giving a pressure to the loosened side of a first timing chain without interference with a second timing chain, to decrease the pressure per unit area between the first timing chain and the chain tensioner, thereby improving the durability thereof.
Solving Means: In a V-type internal combustion engine in which a crank shaft 15 is connected to cam shafts 41₁ and 41₂ for valve systems of first and second banks 4₁ and 4₂ via first and second timing chains 44₁ and 44₂ adjacent to each other in the axial direction, a boss 48₁ₐ at the base, on the crank shaft 15 side, of the first chain tensioner 48₁ is mounted to a crank case 21 at a position 113₁ within a side projection plane of the second timing chain 44₂.

## Claims

1. A V-type internal combustion engine for a vehicle, in which a crank shaft (15) having a pair of journals (18, 17) adjacent to both the ends of the crank shaft (15), which journals are supported by a crank case (21) via ball bearings (20, 19), respectively, is connected to cam shafts (41₁, 41₂) for valve systems of a first bank (41) and a second bank (42) continuously connected to said crank case (21) in a V-shape via first and second timing transmissions (46₁, 46₂) adjacent to each other in the axial direction; and
a first chain tensioner (48₁) for pressing the outer surface of the upper side of a first timing chain (44₁) of said first timing transmission (46₁), a second chain tensioner (48₂) for pressing the outer surface of the lower side of a second timing chain (44₂) of said second timing transmission (46₂), a first chain guide (112₁) being in contact with the outer surface of the lower side of a first timing chain (44₁) of said first timing transmission (46₁), and a second chain guide (112₂) being in contact with the outer surface of the upper side of a second timing chain (44₂) of said second timing transmission (46₂) are mounted to said crank case (21), wherein
a base end (48₁ₐ), on the crank shaft (15) side, of said first chain tensioner (48₁) is pivotably supported, by means of a mounting bolt (113₁), on said crank case (21) at a position within a side projection plane of said second timing chain (44₂), said first and second chain guides (112₁,112₂) are screwed to said crank case (21) in parallel by mounting bolts (113₁, 113₂, 114₁, 114₂),
said V-type internal combustion engine being **characterized in that** said first and second chain tensioners (48₁, 48₂) and said first and second chain guides (112₁, 112₂) are screwed to said crank case (21) in the same direction by said mounting bolts (113₁, 113₂, 114₁, 114₂), and
**in that** the first timing transmission (46₁) and the second timing transmission (46₂) are positioned outwardly from one (17) of said journals (18, 17) of the crank shaft (15).

2. A V-type internal combustion engine for a vehicle according to claim 1, wherein said first chain tensioner (48₁) crosses said second chain tensioner (112₂) in a side view.

## Patentansprüche

1. Verbrennungsmotor in V-Bauart für ein Fahrzeug, worin eine Kurbelwelle (15), die ein Paar von beiden Enden der Kurbelwelle (15) benachbarten Lagerzapfen (18, 17) aufweist, welche Lagerzapfen durch ein Kurbelgehäuse (21) über jeweilige Kugellager (20, 19) abgestützt sind, mit Nockenwellen (41₁, 41₂) für Ventilsysteme einer ersten Bank (4₁) und einer zweiten Bank (4₂), die durchgehend mit dem Kurbelgehäuse (21) in einer V-Form verbunden sind, über erste und zweite Steuergetriebe (46₁, 46₂), die in der Achsrichtung einander benachbart sind, verbunden ist; und
ein erster Kettenspanner (48₁) zum Drücken auf die Außenfläche der Oberseite einer ersten Steuerkette (44₁) des ersten Steuergetriebes (46₁), ein zweiter Kettenspanner (48₂) zum Drücken auf die Außenfläche der Unterseite der zweiten Steuerkette (44₂) des zweiten Steuergetriebes (46₂), eine erste Kettenführung (112₁) in Kontakt mit der Außenfläche der Unterseite einer ersten Steuerkette (44₁) des ersten Steuergetriebes (46₁) sowie ein zweite Kettenführung (112₂) in Kontakt mit der Außenfläche der Oberseite einer zweiten Steuerkette (44₂) des zweiten Steuergetriebes (46₂) an dem Kurbelgehäuse (21) angebracht sind, worin
ein an der Seite der Kurbelwelle (15) liegendes Basisende (48₁ₐ) des ersten Kettenspanners (48₁) mittels eines Montagebolzens (113₁) an dem Kurbelgehäuse (21) an einer Position innerhalb einer seitlichen Projektionsebene der zweiten Steuerkette (44₂) schwenkbar gelagert ist, wobei die ersten und zweiten Kettenführungen (112₁, 112₂) durch Montagebolzen ( 113₁, 113₂, 114₁, 114₂) parallel an das Kurbelgehäuse (21) geschraubt sind,
wobei der Verbrennungsmotor in V-Bauart **dadurch gekennzeichnet ist, dass** die ersten und zweiten Kettenspanner (48₁, 48₂) und die ersten und zweiten Kettenführungen (112₁, 112₂) durch die Montagebolzen ( 113₁, 113₂, 114₁, 114₂) in derselben Richtung an das Kurbelgehäuse geschraubt sind, und
dass das erste Steuergetriebe (46₁) und das zweite Steuergetriebe (46₂) außerhalb eines (17) der Lagerzapfen (18, 17) der Kurbelwelle (15) angeordnet sind.

2. Verbrennungsmotor in V-Bauart für ein Fahrzeug nach Anspruch 1, worin der erste Kettenspanner (48₁) in Seitenansicht den zweiten Kettenspanner (112₂) kreuzt.

## Revendications

1. Moteur à combustion interne de type en V pour véhicule dans lequel un vilebrequin (15) ayant deux tourillons (18, 17) adjacents aux deux extrémités du vilebrequin (15), lesdits tourillons étant supportés par un carter-moteur (21) par l'intermédiaire de roulements à billes (20, 19), respectivement, est raccordé à des arbres à cames (41₁, 41₂) pour des systèmes à soupape d'un premier rang (41) et d'un deuxième rang (42) raccordés en continu audit carter-moteur (21) dans une forme en V par l'intermédiaire de première et deuxième transmissions de distribution (46₁, 46₂) adjacentes l'une à l'autre dans le sens axial ; et
un premier tendeur de chaîne (48₁) pour appuyer sur la surface extérieure du côté supérieur d'une première chaîne de distribution (44₁) de ladite première transmission de distribution (46₁), un deuxième tendeur de chaîne (48₂) pour appuyer sur la surface extérieure du côté inférieur d'une deuxième chaîne de distribution (44₂) de ladite deuxième transmission de distribution (46₂), un premier guide de chaîne (112₁) qui est en contact avec la surface extérieure du côté inférieur d'une première chaîne de distribution (44₁) de ladite première transmission de distribution (46₁), et un deuxième guide de chaîne (112₂) qui est en contact avec la surface extérieure du côté supérieur d'une deuxième chaîne de distribution (44₂) de ladite deuxième transmission de distribution (46₂) sont montés sur ledit carter-moteur (21), dans lequel une extrémité de base (48₁ₐ), sur le côté du vilebrequin (15), dudit premier tendeur de chaîne (48₁) est supportée de façon pivotante, au moyen d'un boulon de montage (113₁), sur ledit carter-moteur (21) à une position située dans un plan de projection latéral de ladite deuxième chaîne de distribution (44₂), lesdits premier et deuxième guides de chaîne (112₁, 112₂) sont vissés audit vilebrequin (21) en parallèle par des boulons de montage (113₁, 113₂, 114₁, 114₂),
ledit moteur à combustion interne de type en V étant **caractérisé en ce que** lesdits premier et deuxième tendeurs de chaîne (48₁, 48₂) et lesdits premier et deuxième guides de chaîne (112₁, 112₂) sont vissés audit carter-moteur (21) dans le même sens par lesdits boulons de montage (113₁, 113₂, 114₁, 114₂), et
**en ce que** la première transmission de distribution (46₁) et la deuxième transmission de distribution (46₂) sont positionnées à l'extérieur de l'un (17) desdits tourillons (18, 17) du vilebrequin (15).

2. Moteur à combustion interne de type en V pour un véhicule selon la revendication 1, dans lequel ledit premier tendeur de chaîne (48₁) croise ledit deuxième tendeur de chaîne (112₂) en vue latérale.
